# EUROPEAN PATENT APPLICATION

(11) **EP 4 656 034 A1**
(43) Date of publication of application: **03.12.2025**
(21) Application number: 24206089.5
(22) Date of filing: 11.10.2024
(51) Int. Cl.: A01G 17/06, A01G 17/14

(54) **IMPROVED WIRE SUPPORTING DEVICE FOR AGRICULTURAL POLES**

(30) Priority: 27.05.2024 IT 202400011926
(71) Applicant: Bortolussi, Franco, 33080 Fiume Veneto (PN) (IT); Bortolussi, Claudio, 33080 Fiume Veneto (PN) (IT)
(72) Inventor: Bortolussi, Franco, 33080 Fiume Veneto (PN) (IT); Bortolussi, Claudio, 33080 Fiume Veneto (PN) (IT)
(74) Representative: Giugni, Diego

(57) **Abstract**

The present invention relates to an improved device for supporting wires for supporting vegetation of plants, preferably orchards and especially vineyards. In particular, the invention relates to a hook to be applied to an agricultural pole, that is particularly versatile, easy to use and cost-effective to produce. The invention also relates to an agricultural pole comprising such hook and to a method and a plant for supporting plants in rows comprising the implementation of said pole with hook.

## Description

### FIELD OF THE INVENTION

**.** The present invention relates to an improved device for supporting wires for supporting vegetation of plants, preferably orchards and especially vineyards. In particular, the invention relates to a hook to be applied to an agricultural pole, that is particularly versatile, easy to use and cost-effective to produce. The invention also relates to an agricultural pole comprising such hook and to a method and a plant for supporting plants in rows comprising the implementation of said pole with hook.

### BACKGROUND OF THE INVENTION

**.** In agriculture, and in particular in the viticulture industry, it is well known to provide support structures for plants consisting of rows of poles driven into the ground so as to form rows. The poles are spaced from each other and they are interconnected in their parts protruding from the ground by a horizontal wire, called a "load-bearing wire", which is fixed on said poles at an appropriate height from the ground surface. Furthermore, at least one pair of wires parallel to each other and arranged on respective sides of each pole of the row are fixed on the two poles which are located at the ends of each row, called "head poles". These wires are commonly referred to as "containment wires" or "movable wires" given that, during the various stages of plant cultivation, they are moved to different heights from the ground to contain and organise the growing vegetation according to a desired configuration. As a matter of fact, in winter, when vine shoots are very short or are completely absent, pairs of movable wires are arranged close to the ground. In the spring and summer, when the plants produce ever more luxuriant vegetation, each pair of movable wires is placed progressively further away from the ground in the direction orthogonal to the ground, harnessing the vegetation between the wires of each pair, therefore organising the development thereof according to a desired configuration. This operation is commonly carried out to ensure an increasing exposure of the foliar surface and the fruits of the plants to the sun and wind. Furthermore, this facilitates vegetation treatment operations such as clipping, plant protection treatments and other fully conventional treatments.

**.** It is clear that in order to carry out their function properly, the movable wires, in particular, must be engageable stably but removably at different heights along the intermediate poles, that is the poles arranged along the row between the two head poles. As a matter of fact, in order to meet the aforementioned need to support the growth of the leaf surface, the movable wires must be locked in progressively vertically higher positions.

**.** Therefore, especially with regard to the movable wires, the intermediate poles must be provided with suitable hooking systems, while the head poles are conventionally provided with elastically compensating devices like the ones disclosed by the patent EP1699286 to fix the ends of said wires and allow the vertical excursion thereof.

**.** The simplest hooking systems consist of tabs cut on the opposite side walls of an intermediate pole so as to protrude from the pole and allow the support of the wire. The cuttings are multiple and obtained at pre-determined distances along the pole specifically so as to allow various positionings of the wires on the pole.

**.** These tabs, although very simple and common, these tabs reveal the drawback of protruding from the pole and creating problems when carrying out operations such as for example harvesting fruits using agricultural machines which can be easily entangled in the tabs and be damaged or deformed easily therefore closing and complicating the insertion or jamming the wire.

**.** In order to overcome this drawback, there have been developed poles shaped so as to provide for walls with vertical ribs provided with variously shaped openings so as to receive the wires. As a matter of fact, the openings can be simple horizontal cuts for inserting the wires and relative vertical grooves for receiving them. Other more complex forms have a Z or N pattern so as to render difficult the accidental exit of the of the wires for example when shaking the rows for harvesting fruits.

**.** However, even these solutions reveal drawbacks on the one hand related to the processing of the poles which complicates the manufacturing thereof and the relative costs and on the other hand the manoeuvrability of the wires for engagement in said openings given that the insertion in the most complex forms is not always simple given that the wires are stretched; in the simplest forms instead, the wire may easily exit even only due to the displacements caused by the entangled vegetation moved by the wind.

**.** Then, there are wire-carrier device which are applied on the outer surface of the poles as an alternative to the aforementioned tabs or static openings obtained directly on the wall of the poles. For example, patent US5501035 discloses an assembly device for supporting metal wires of trellis for rows comprising a first element with a pair of arms which extend externally on opposite sides of a support pole and which are provided with openings for receiving a metal wire, and a second element coupled to the first element so as to retain it on the pole by simply folding it on itself after embracing the two arms of the first element.

**.** Patent US6405479 describes a device similar to US5501035 wherein a plate acts like mentioned above clamping the two wire carrier arms of a first element on the pole between each other.

**.** Patent application n° EP0876756A1 also describes a device very similar to the devices of the patents mentioned above, but like for the latter there is present a bracket anchoring element for clamping a wire-carrier element, without being engaged to the pole.

**.** The European patent application EP0876757A1 describes several devices for the extension of a pole for a vineyard comprising an extended U-shaped element which can be inserted into a hollow pole with hexagonal cross-section and carrying a pair of elements for supporting wires.

**.** Each of the aforementioned documents, except the last one, describes a solution in which the wire carrier device is fixed on the outer surface of a pole using a clamping element. Therefore, the device consists of two elements: an actual wire carrier and an element for clamping said wire carrier on the pole for the locking thereof in the desired position. However, it should be observed that irrespective of the shape and nature of the clamping element, the exerted clamping strength is directed around the pole or a portion thereof. As a result, if not well tightened, such clamping element may not operate appropriately. Furthermore, the two components of the device have significant overall dimensions which protrude with respect to the pole and could be potentially hazardous especially for processing operations with agricultural machines as explained above. Still, the device however consists of two separate elements to be produced and assembled with the resulting increase in the costs of labour.

**.** On the contrary, the last document may be applied only to the open upper end of the pole and therefore it cannot be positioned at different heights along the pole. This strong limitation makes the use thereof difficult to follow the growing vegetation.

### SUMMARY OF THE INVENTION

**.** Therefore, the task of the present invention is to provide a support or wire carrier device for wires, in particular for load-bearing wires and movable support wires for vine shoots or plant branches, that overcomes the defects and drawbacks of the devices of the known type like the ones described above.

**.** In the context of the task outlined above, therefore an object of the present invention to provide a wire support device that is very easy to construct and quick to install on a pole of a row of plants, and that is also easy to actuate, assemble and cost-effective to manufacture.

**.** Another object is to provide a wire support device that can be mounted on any type of pole for rows of plants irrespective of the shape and size of the cross-section of the pole.

**.** A further object of the present invention is to provide a device whose overall dimensions do not substantially alter the overall dimensions of the elements on which it is mounted so as not to affect the processing operations especially mechanised along the rows.

**.** A further object of the present invention is to provide a device, in particular for movable wires for supporting vine shoots or plant branches, substantially without malfunctions and which allows for a great versatility of use and reliability in the durability of the wire.

**.** Other objects are a pole for supporting plants in rows and a method and a system for supporting plants in rows comprising such device.

### BRIEF DESCRIPTION OF THE DRAWINGS

**.** The task and objects outlined above are attained by a device for supporting wires for supporting the vegetation having the characteristics outlined in the attached claims. Characteristics and advantages of the invention will be apparent from the following description, provided by way of non-limiting example, with reference to the attached drawings, wherein:
- figure 1 shows a schematic view of a system for supporting a row of vines;
- figure 2 shows an axonometric view of a perfected device for supporting wires for supporting the vegetation of a row according to the present invention;
- figure 3 shows a lateral view of the device of figure 2;
- figure 4 shows a front view of the device of figure 2;
- figure 5 shows an axonometric view of an agricultural pole for rows with the device of figure 2 not fitted;
- figure 6 shows an axonometric view of the pole of figure 5 with the device of figure 2 in a first assembly step;
- figure 7 shows an axonometric view of the pole of figure 5 with the device of figure 2 in a second assembly step;
- figure 8 shows an axonometric view of the pole of figure 5 with the device of figure 2 in a third assembly step;
- figure 9 shows an axonometric view of the pole of figure 5 with the device of figure 2 fitted;
- figure 10 shows an axonometric view of the pole of figure 9 with a wire for supporting the vegetation separated;
- figure 11 shows an axonometric view of the pole of figure 10 with the wire in a first position for engagement with the device 2;
- figure 12 shows an axonometric view of the pole of figure 10 with a wire engaged with the device of figure 2;
- figure 13 shows a view of a different embodiment of the device of the invention, from a first side;
- figure 14 shows a view of the device of figure 13 from a second side;
- figure 15 shows a front view of the device of figure 13;
- figure 16 shows a lateral view an agricultural pole for rows with the device of figure 13 applied.

### DETAILED DESCRIPTION OF THE INVENTION

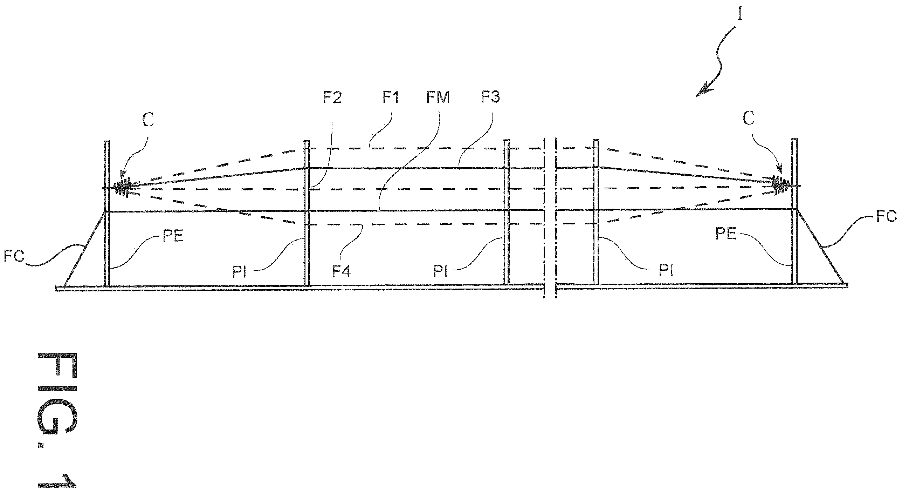

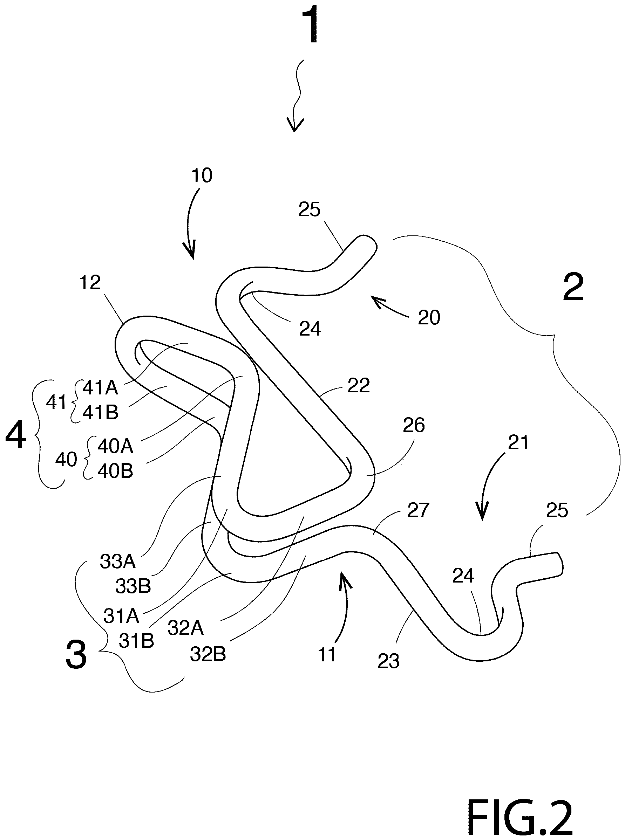

**.** Figure 2 shows an improved device 1 for supporting wires for supporting the vegetation, preferably wires for containing the vegetation. This type of device is engaged in a system I for supporting plants in a row as exemplified in figure 1. Usually, the plant consists of a plurality of poles arranged aligned and spaced apart from each other. As known, the poles may consist of appropriate elements made of wood, concrete cement or even metal or plastic, having cross-sections of different shapes and often provided with elements and/or devices for hooking, even reversible, horizontally stretched metal wires thereon. The poles resulting at the ends of the row, called "head poles", are indicated with reference PE and the intermediate ones with PI. On all the poles PE and PI there is fixed at an appropriate height from the ground a fixed wire FM called "load-bearing wire". Furthermore, the head poles are suitably braced by appropriate wind-bracing wires indicated with reference FC. Furthermore, on the head poles PE there are provided for elastic compensation devices C arranged at an appropriate distance from the ground; in the example shown in figure 1 the elastic compensation devices C are arranged in a position above the one for fixing the load-bearing wire FM. To each elastic compensation device C there is associated a pair of movable wires F which are arranged on both sides of the intermediate poles PI, that is the sides defined by the system. Thanks to the elasticity of the compensation devices C, the movable wires F may be fixed using simple operations for engaging to suitable support or engagement devices or elements obtained or applied on the relative intermediate poles PI so as to be positioned at different heights from the ground. To highlight various possible positionings of the movable wires F, to the common reference F there was added a numerical symbol. Furthermore, the position of the wire F3 alone is indicated with a bold line while the others, and precisely the positions of the two lower movable wires and that of the wire above the wire F3, are indicated with dashed lines and respectively with references F1, F2 and F4. The movable wires are also called wires for containing the growing vegetation given that in the space defined between them the vegetation is contained and supported during growth. Alternatively, for each elastically compensating device there may be associated a single wire to be tensioned so as to have individual wires that can be displaced independently with respect to each other. In this case, there can be fitted two pole devices on the two sides of the pole.

**.** With reference to the figures 2-4, described below is an improved device 1 for supporting wires support wires according to the present invention.

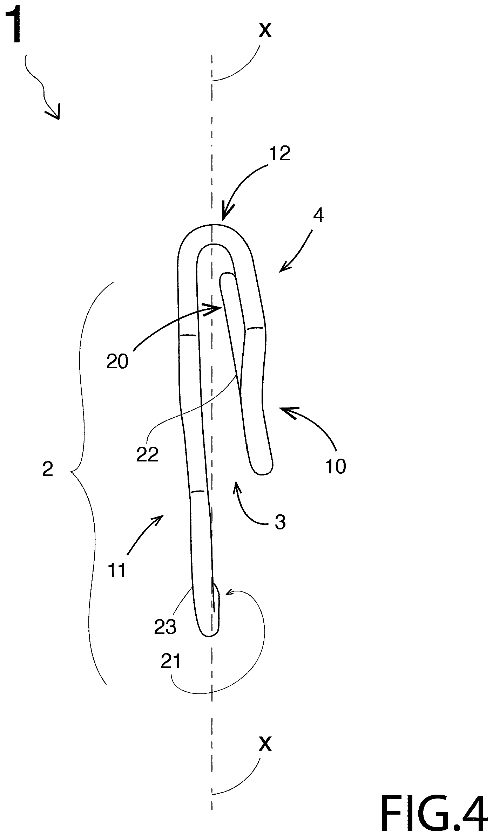

**.** This device comprises a first portion 2 adapted to be hooked to an agricultural pole, a second portion 3 for engagement with the wire for supporting or containing the vegetation and a third portion 4 for reversibly locking the wire in the second portion. It should be observed that the device 1 is formed by a single piece made of a hard material but with elastic capacity. Therefore, the first 2 and second 3 and third 4 portions are made of a single piece and continuous with respect to each other. In particular, the piece of material consists of a single shaped metal wire, preferably with round cross-section, formed by a first part 10 and a second part 11 connected as a single piece by a saddle 12. The two first 10 and second 11 parts are shaped so as to be substantially parallel and separated by a plane passing through a longitudinal axis X-X of the device 1, as shown in figure 4.

**.** Preferably, the device is made of metal material such as steel, CORTEN steel, stainless steel, galvanised iron or metal alloys. More preferably, it is made of stainless steel. Alternatively, it may be made of resistant or reinforced plastic material for example with glass fibres or carbon or PREPREG material.

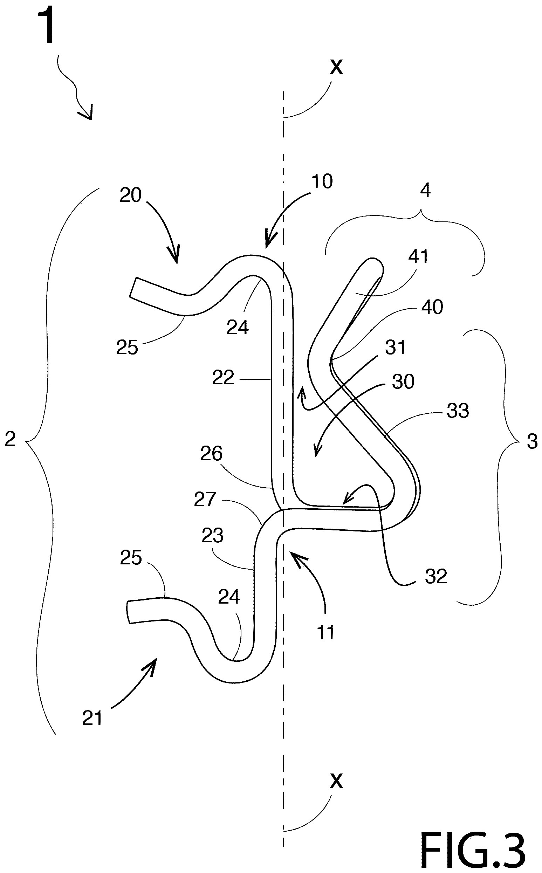

**.** The first portion 2 comprises a first 20 and a second 21 ends of the shaped wire which forms the device, and corresponding first 22 and second 23 longitudinal sections which are respectively connected each to said ends by means of a respective first curved section 24 (figures 2 and 3). In particular, said first 22 and second 23 longitudinal sections extend opposite along a longitudinal axis X-X of the device 1. Each end is then generally shaped to form a hook adapted to engage a corresponding hole obtained on the pole, as explained below. Preferably, at least one of said first and second ends is generally S-shaped wherein the first section of the S corresponds to said first 24 curved section and the second section of the S is a second 25 curved section. The respective first curved sections 24 of each first 20 and second 21 end are folded with converging development, while the second curved sections 25 have a divergent development.

**.** Furthermore, each first 20 and second 21 end extends substantially orthogonal to the respective first 22 and second 23 longitudinal section of the first portion 2 and said longitudinal sections converge with respect to each other. The first 22 and second 23 longitudinal sections with at least one of the two first 20 and second 21 ends lie on two approached parallel planes (figure 4). Furthermore, the ends are faced on one side of the axis X-X which is opposite to the side of the axis in which the second 3 and third 4 portions mentioned above are found. From the opposite end with respect to the first curved section 24 (figure 3), the first 22 and second 23 longitudinal sections are in turn connected with the second portion 3 of the device through a third curved section respectively, 26 and 27.

**.** The second portion 3 for engaging or receiving the wire for supporting or containing the vegetation is a folding of the wire of the device which is turned from the opposite side of the axis X-X with respect to that of the extension of the first 20 and second 21 ends of the portion 2. Therefore, the folding creates a sort of pocket 30 (figure 3) adapted to receive and support a wire for supporting the vegetation and formed by two pieces of the wire of the device 1 parallel and one part of said first part 10 and one of said second part 11 of the metal wire. Furthermore, the shape of the folding may be generally triangular, as shown in the figures 2 and 3, and that is with the pocket 30 facing towards the second end 21 of the first portion 2 and a narrowing 31 opposite to the pocket The pocket 30 has a bottom 32 which is connected with each of the aforementioned second curved sections 26, 27 of the first portion 2, on one side, and on the other side it is connected with the third portion 4 by means of a section 33. The section 33 is inclined towards the first end 20 of the first portion 2 so as to define the narrowing 31 with the first longitudinal section 22 of said first end.

**.** Other embodiments of the second portion 3 may be drop, square, oblong-shaped, all with the conformation mentioned above of the bottom and of the connections with the first portion 2.

**.** The third portion 4 extends from the section 33 of the pocket 30 of the second portion 3 with a first curved section 40 which defines the inlet of said narrowing 31 and a second straight section 41 moving away from the first end 20 so as to form a guide element for the wire which should engage the second portion 3. In other words, the second section 41 creates a plane inclined towards the narrowing so as to facilitate the insertion of the wire.

**.** As mentioned above, according to the present invention, the device 1 consists of a single shaped metal wire, preferably made of stainless steel and round cross-section. The wire may have a variable diameter generally ranging from 1.5 mm to 3.5 mm depending on the specific needs or preferences. This wire is partly folded on itself so as to form a first single-wire portion 2 and the second 3 and third 4 double wire portions, that is each of the latter two portions is formed by two pieces or segments of the wire arranged adjacent to each other. The length of the first portion 2 is calibrated depending on the holes that are present on the pole; therefore, the wire may be easily shaped starting from the third portion 4, then followed by the second portion 3 and lastly the first portion 2 so that the latter has a distance between the first end 20 and the second end 21 substantially coincident with the distance between two holes obtained on the pole, as explained in greater detail below.

**.** Basically, the second section 41 of the third portion 4 is a U-shaped wire portion with two straight parallel branches 41A, 41B joined by the aforementioned saddle 12 and which are connected with corresponding curved parallel branches 40A, 40B of the first curved section 40 (figure 2). In turn, the curved parallel branches are joined with straight parallel branches 33A, 33B of the section 33 of the pocket 30 of the second portion 3. Said straight parallel branches 33A and 33B are then joined to the straight parallel branches 32A, 32B of the bottom 32 of the pocket through corresponding curved branches 31A and 31B. The two straight parallel branches of the bottom 32 are connected one with a curved section 26 of the longitudinal portion 22 joined to the first end 20 and one with a curved section 27 of the longitudinal portion 23 joined to the second end 21 of the first portion 2. As a result, at said curved sections of the longitudinal portions, the two parallel sections of the wire of the device are separated into individual sections in opposite directions along the axis X-X.

**.** The operation of the improved 1 device of the invention is advantageous given that through simple operations it can be applied to an agricultural pole and it can safely and removably a wire for supporting and containing the vegetation. Described below is the assembly and the operation of the improved device 1 with reference to a pole P in operating condition that is when driven into the ground. As a result, the spatial expressions, above, below, upper, lower, top and bottom and the like shall be deemed to refer to the pole in this condition.

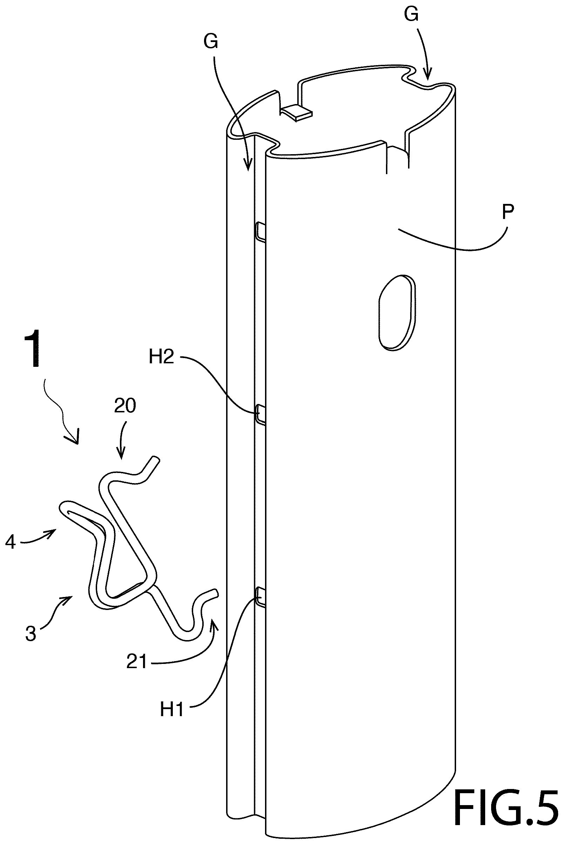

**.** As shown in figure 5, the improved device 1 is firstly approached to an agricultural pole P provided with a plurality of holes H1, H2 for example obtained on two opposite or side walls of the pole. Preferably, the holes H1, H2 are obtained on two recessed longitudinal grooves G obtained on two opposite sides of the pole P so that there is minimum protrusion once the devices have been fitted.

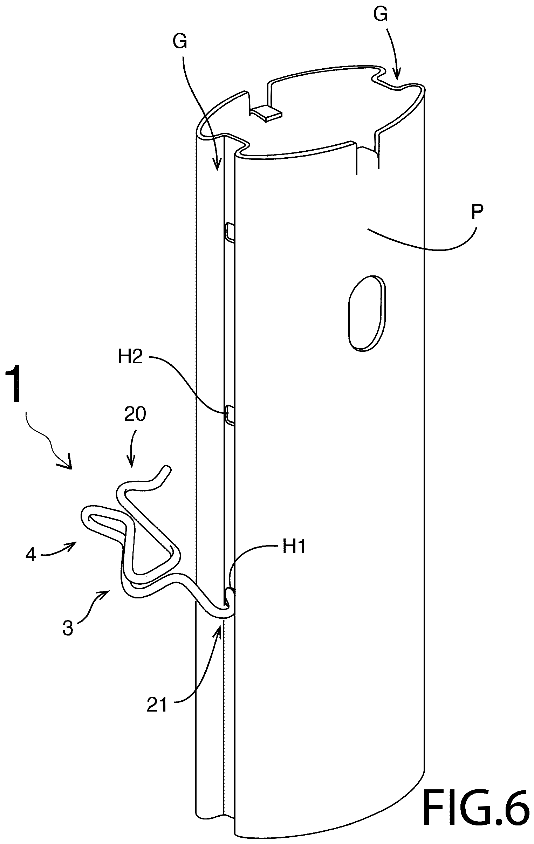

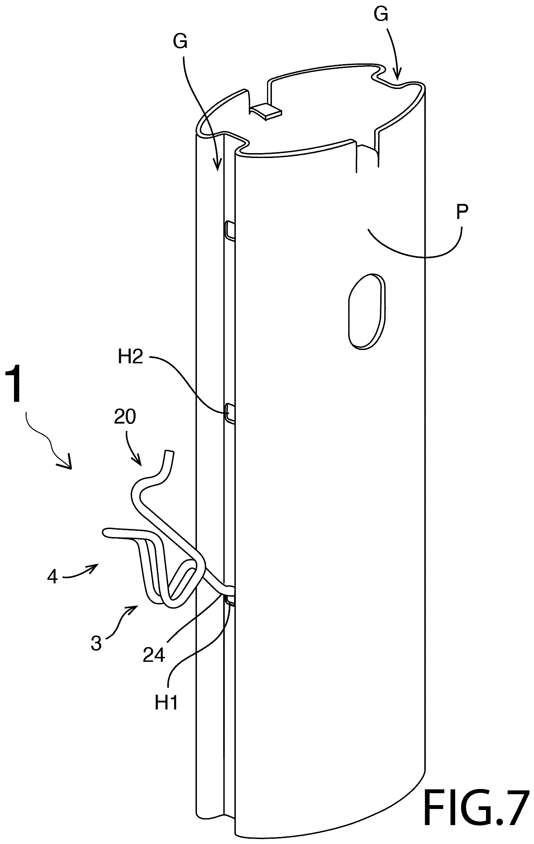

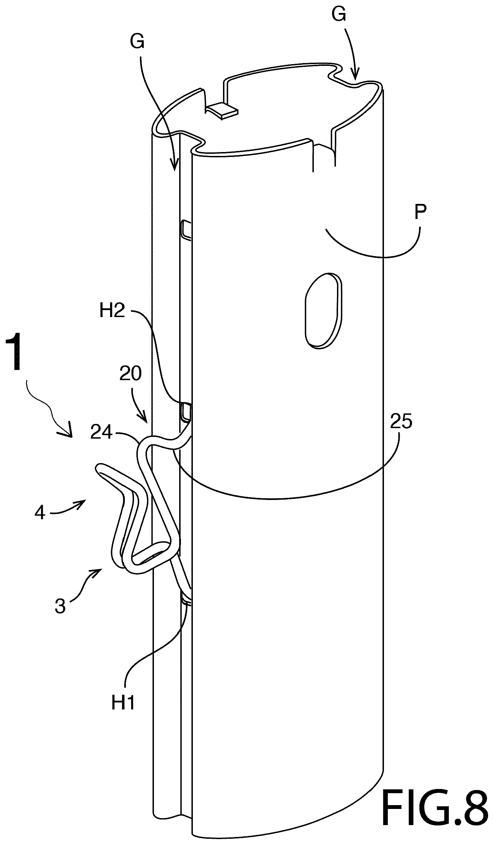

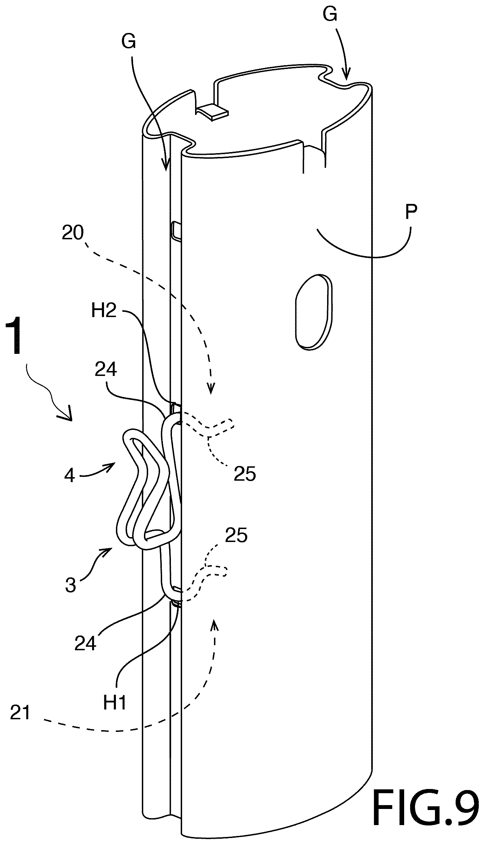

**.** The device 1 is oriented with the first end 20 upwards and, as a result together with the second end 21, facing towards a groove G of the pole, as shown in figure 5. In this position, one of the two ends of the first portion 2, for example the second as shown in figure 6, is inserted into a first lower hole H1 with a slight downward and clockwise rotation so as to allow the hook portion of said end to easily pass through the hole. Once the second end 21 has been inserted so that the first curved section 24 engages the edge of the hole (figure 7), the first end 20 of the first portion 2 is inserted into the second upper hole H2. This operation is carried out by rotating the device 1 with respect to the hole H1 so that the second curved section 25 of the first end 20 does not abut against the edge of the second upper hole H2 (figure 8). At this point, it is sufficient to push the first end 20 against the pole P so that the second curved section 25 enters into the second hole obtaining a snap (figure 9).
In this final position, the first curved section 24 of the first end 20 is also, just like the corresponding first curved section 24 of the second portion 21, engaged in the inner edge of the second hole H2.

**.** The device 1 of the invention is now firmly locked on the pole P and it is ready to receive a wire for containing and carrying the vegetation of a plant.

**.** As a matter of fact, it should be observed that in this position, the pocket 30 of the second portion 3 is partially received in the groove G and therefore firmly anchored to the pole thanks to the elastic engagement mentioned above of the first end 20 on the second hole H2, of the second end 21 on the first hole H1 and of the pocket 30 in the groove G of the pole P (figure 9).

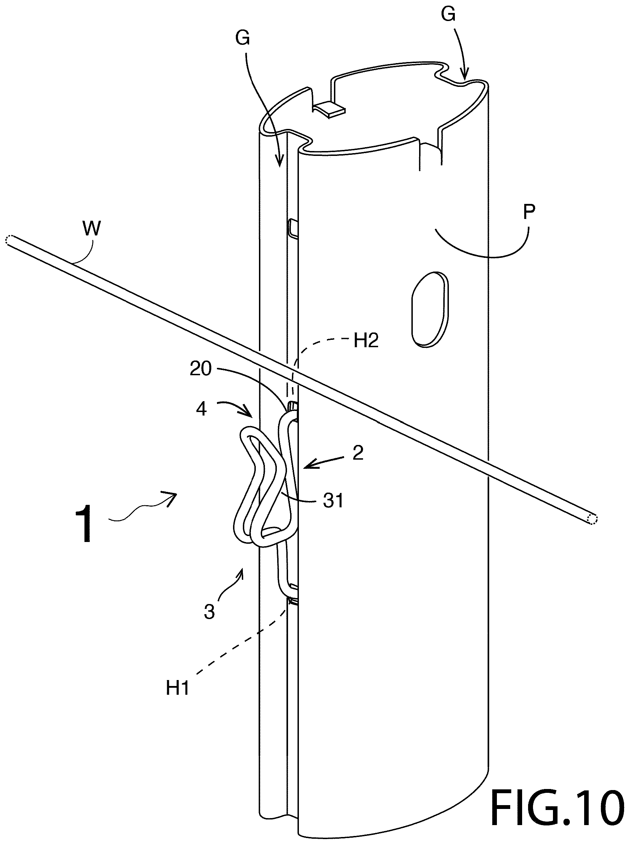

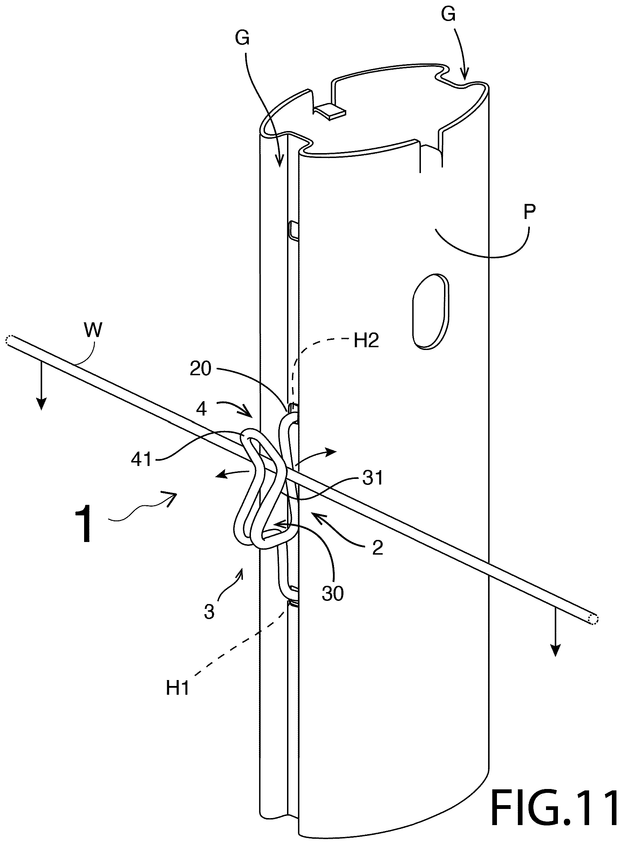

**.** The device 1 is ready for use. As a matter of fact, while the first portion 2 is firmly engaged to the pole P, the second 3 and the third 4 portion protrude from the groove G to receive the wire W for supporting or containing the vegetation (figure 10). Therefore, the wire W is positioned stretched horizontally above the device 1 and lowered above the narrowing 31 of the second portion 3, as shown by the arrows directed downwards in figure 11. Thanks to the guide element of the second section 41 of the third portion 4, the wire can be easily guided and pushed through the narrowing so as to surpass it elastically forcing the first section 40 of the third portion to move away from the first end 20 of the first portion 2, as shown by the horizontal arrows in figure 11.

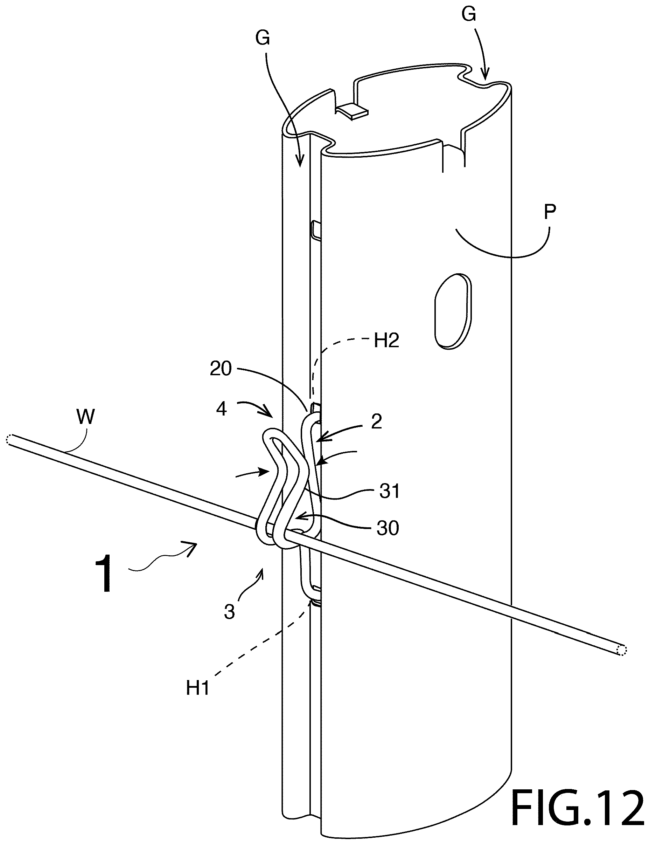

**.** Upon surpassing the narrowing 31, the wire W falls into the pocket 30 of the second portion 3 and the third portion 4 approaches the first 20 of the first portion 2 again redefining the space of the initial narrowing, as shown by the arrows of figure 12. In this manner, the wire W is secured in position and it can be released from the engagement on the pole P only acting with force in the reverse direction compared to the explanation outlined above for engagement in the pocket 30.

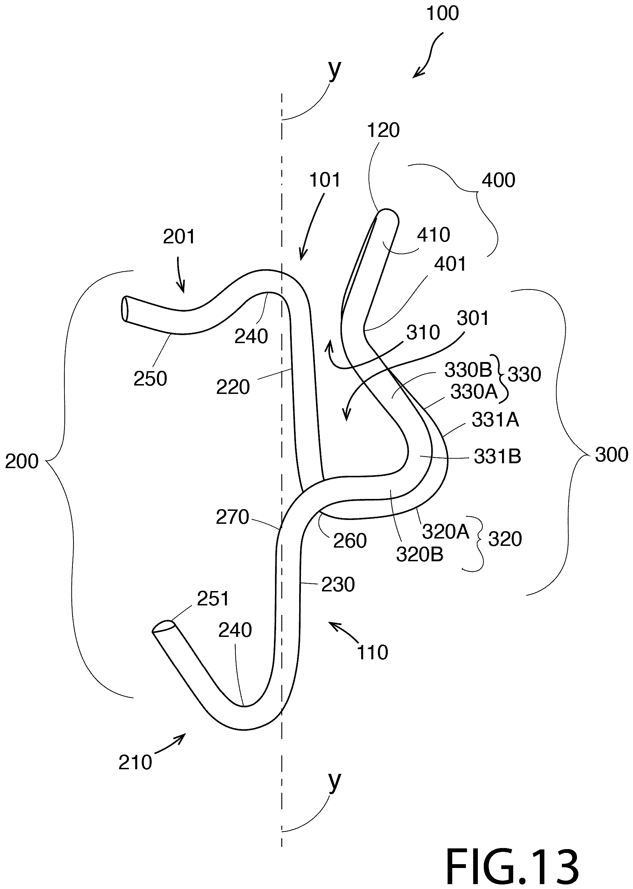

**.** According to a variant embodiment of the device of the invention, figures 13-16 show a device 100 having a general structure and shape similar to those described above. Therefore, the identical parts will not be described further but only indicated with reference numerals and named as a result.

**.** The device 100 is therefore formed by a single wire folded in a first part 101 joined to a second part 110 using a saddle 120. Furthermore, it comprises a first portion 200 adapted to be hooked to an agricultural pole, a second portion 300 for engagement with the wire for supporting or containing the vegetation and a third portion 400 for reversibly locking the wire in the second portion. Like mentioned above, the device 100 is formed by a single piece made of hard material but with elastic capacities, for example a metal wire like the one described with reference to the device 1.

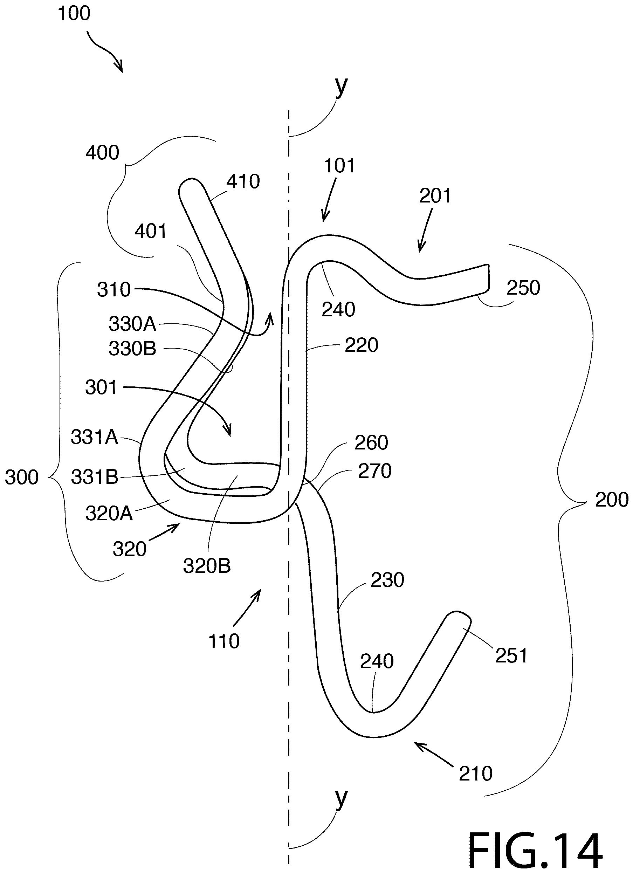

**.** The first portion 200 comprises a first end 201 identical to the first end 20 of the aforementioned device 1 and a second end 210, and corresponding first 220 and second 230 longitudinal sections which are respectively connected each to said ends by means of a first curved section 240 (figures 13 and 14). The first 220 and seconds 230 longitudinal sections extend opposite along a longitudinal axis Y-Y of the device 100 and they are connected with the respective first 201 and second 210 ends by means of corresponding third curved sections 260 and 270.

**.** In particular, the second end 210 is generally U-shaped. Preferably, the first end 201 is generally S-shaped as mentioned above with reference to device 1, and the second 210 has a section 250 which extends straight from the first curved section 240 towards the first end 201, preferably moving away from the longitudinal section 230. It should be observed that the first curved sections 240 of each first 201 and second 210 end are folded with converging development.

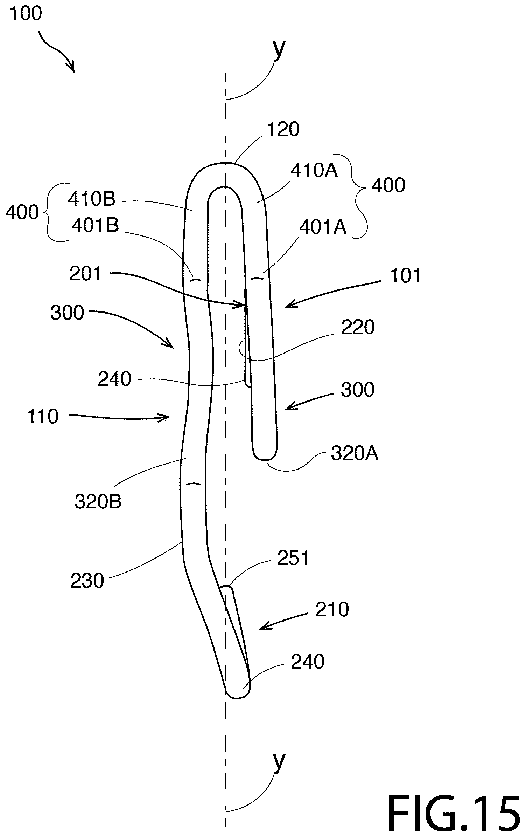

**.** Th first end 201 extends substantially orthogonal to the respective first longitudinal section 220 and it lies substantially on the same plane of the longitudinal section 220. Otherwise, the second end 210 is inclined with respect to the longitudinal section 230 towards the longitudinal section 220 of the first end 201, as shown in figure 15.

**.** Furthermore, the first 201 and second 210 ends are faced on the same side of the axis X-X which is opposite to the side of the axis in which the second 3 and third 4 portions are found.

**.** The second portion 300 is substantially identical in shape with respect to the second portion 3 of the device 1 described above. As shown in the figures 13 and 14, the second portion differs from that of the device 1 in that the parallel curved branch 331A, which connects the straight section 330A with the bottom 320 of the pocket 301, and the straight parallel branch 320A of the bottom 320 of the pocket protrude with respect to the corresponding curved branch 331B and straight parallel branch 320B, when the device 100 is seen laterally.

**.** The two straight parallel branches 320A and 320B are then respectively connected with the longitudinal portion 220 and with the longitudinal portion 230 through a curved section 260 and 270.

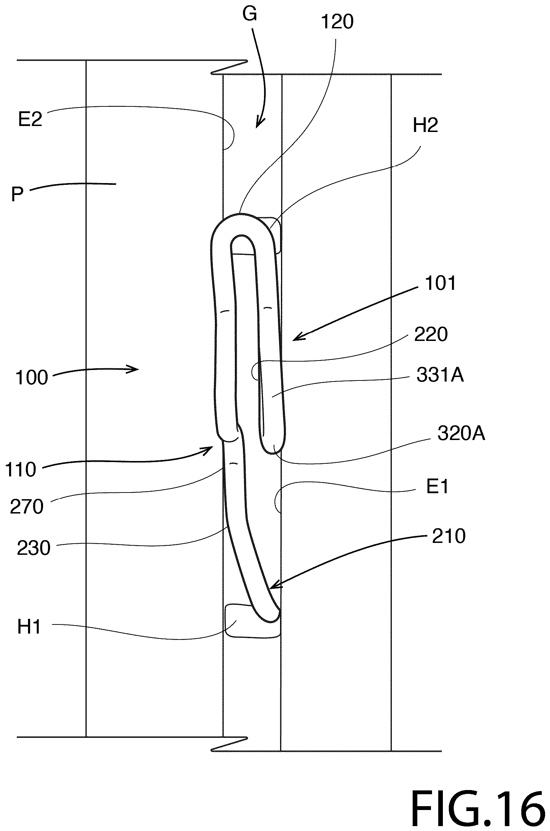

**.** The present variant of the device 100 of the invention is assembled substantially in the same manner as described above. The advantage of the latter embodiment lies in the fact that, as shown in figures 15 and 16, thanks to the inclination of the second end 210 towards the axis Y-Y of the device 100, that is towards the internal of the device, and thanks to the protrusion of the parallel curved branch 331A with respect to the corresponding parallel curved branch 331B of the section of the pocket 301, the device 100 is configured so as to engage the pole P with a sort of elastic deformation load. This deformation, explained below, ensures an excellent stability of the device against stresses derived from the wire W when engaged in the device or against direct stresses to the second 300 and third 400 portions.

**.** Basically, as shown in figure 16, once fitted onto the pole P, the device 100 has the first part 101 positioned against a first edge E1 of the groove G of the pole P, in particular with the longitudinal section 220 of the first portion 200 in contact with such edge and inside the groove. The first end 201 of the first portion is then engaged in the second hole H2, like for the device 1 described above. The second part 110 is instead placed against a second edge E2 of the groove G of the pole P, opposite to the first, in particular with the curved section 270 and the longitudinal section 230 inside the groove G. Furthermore, the second end 210 engages the first hole H1 of the pole at said first edge E1 of the groove G, thanks to the inclination of the longitudinal section 230.

**.** Advantageously, in this position, the device 100 is elastically loaded given that the third curved section 270 abutting against the second edge E2 and the second end 210 abutting against the first edge E1 of the groove G, the device is subjected to some sort of torsion which pushes the first part 101 against the first edge E1 and the device remains locked in the space between the two edges E1 and E2 and, as a result, also the first end 201 clamping it in the pole. The aforementioned protrusion of the curve 331A and of the section 320A then tend to exert a traction on the first end 201 increasing the clamping on the pole.

**.** A second object of the present invention is an agricultural pole P for supporting fixed or movable wires for containing the vegetation comprising at least one device 1 as described above. In particular, the pole P is a pole preferably made of metal material such as CORTEN steel, stainless steel, galvanised iron or made of plastic material. Furthermore, it can be made of various embodiments both open and closed, that is with a cross-section that is open or closed, round, oval, polygonal, oblong, elliptical, lobed, with protruding ribs. The pole P is then usually provided with through holes H1, H2 for engagement with the various devices used in the field of agriculture. Furthermore, the pole comprises through holes H1, H2 positioned at different heights on two opposite sides so as to be engaged by the aforementioned device 1 as explained above. According to a preferred embodiment of the invention, the pole P comprises two opposite recessed grooves G whose bottom is provided with said plurality of holes H1, H2 adapted to receive the device described above.

**.** A further object of the present invention is a system (figure 1) for supporting rows of plants, comprising at least one end pole PE or head pole secured to the ground using conventional means such as for example concrete bases. Furthermore, the end pole is generally wind-braced using wind-bracing wires FC secured to the ground using conventional anchors.

**.** Alternatively or combined, to the head pole there may be preferably connected a pole driven vertically by means of a first profile (not shown) positioned at the upper ends of said head pole and of the corresponding vertical pole, and possibly by means of a second profile positioned at the lower ends of said poles driven into the ground so as to form a rigid structure that resists against the tension of the wires of the row, as described in patent EP2988589.

**.** Fixed wires FM (or carrying wires FF as defined in said patent and distinct from the containment wires instead indicated as FM) are fixed to the two end poles PE at a pre-established and unvaried height so as to support the fruit cane of a plant. Furthermore, these wires are maintained at this height from the ground along the entire system due to the engagement of the devices 1 mentioned above fitted on each intermediate pole PI.

**.** Movable wires F3 are connected at least at one end to the elastic compensation devices C, the devices in turn being fixed to the end poles PE. Along the row, also the movable wires are kept at different heights thanks to the devices 1 mentioned above of the present invention.

**.** Yet another object of the invention is method for supporting plants along rows, comprising the steps of:
- fixing two end poles PE, that are wind-braced using suitable means, into the ground at a predetermined distance;
- arranging in a straight line between two end poles PE a plurality of intermediate poles PI comprising devices 1 for reversibly hooking wires F for supporting the plants as described above;
- fixing to said two head poles at least one fixed wire FM for supporting a fruit cane of said plants and a plurality of movable wires F1-F4 on two sides of said head poles so as to cover the entire length of the row in a parallel fashion and delimiting a space for containing the branches of the growing plants, wherein said movable wires and/or fixed wire can be reversibly hooked on said intermediate poles at different heights from the ground using said devices 1.

**.** In the light of the above, it is clear that the drawbacks of the prior art have been overcome and the significant advantages have been achieved.

**.** First and foremost, the complex structure of the prior art devices has been simplified significantly. As a result, the complexity and production times have also been significantly reduced.

**.** Secondly, this simplification enables to avoid problems linked to easy breaking and malfunctions.

**.** Advantageously, providing a single-wire element suitably shaped with all the functional portions obviously significantly reduces production costs and enables an accurate control of the device.

**.** Furthermore, the shaped single piece device requires simple forming operations and ease of fitting onto the pole given that this can be done using one hand only.

**.** A particular advantage lies in the fact that the device is engaged on the pole leaving minimum clearance outwards, useful for receiving the wire for supporting or containing the vegetation.

**.** The particular conformation also makes the device easy to remove given that it is sufficient to act using a simple screwdriver or awl on the groove of the pole at the first curved section 24 of an end of the first portion 2 so as to allow the release from the corresponding hole of said end. Then, all one has to do is reversely carry out the rotations mentioned above to also release the other end of the second portion releasing the device from the pole.

**.** Further changes to the device of the invention can be implemented by the person skilled in the art without departing from the scope of protection of the attached claims.

## Claims

1. Support device (1;100) for wires (W) for supporting or containing vegetation in a row of plants, comprising a first portion (2;200) adapted to be hooked to an agricultural pole (P), a second portion (3;300) for engagement with a wire (W) for supporting or containing the vegetation and a third portion (4;400) for the reversible locking of the wire in the second portion (3;300), **characterized in that** said first (2;200), second (3;300) and third (4;400) portions are formed by a single shaped element which generally extends along a longitudinal axis (X-X;Y-Y), wherein the first portion (2;200) is adapted to be hooked to said pole (P) by means of two first (20;201) and second (21;210) ends shaped like a hook to engage corresponding second (H2) and first (H1) holes of said pole, wherein said second portion (3;300) forms a pocket (30;301) for receiving the wire (W) and wherein said third portion (4;400) forms an elastic element for guiding the insertion and reversible locking of the wire in the pocket.

2. Device (1;100) according to claim 1, wherein said single shaped element is a wire made of hard but elastic material folded to form a first part (10;101) connected as a single piece to a second part (11;110) by means of a saddle (12;120) so that said parts are generally parallel with respect to a plane passing through said longitudinal axis (X-X;Y-Y), and said first portion (2;200) is single-wired while said second (3;300) and third (4;400) portions are double-wired.

3. Device (1;100) according to claim 1 or 2, wherein the first (20;201) and second (21;210) ends of said first portion (2;200) are each connected, by means of a first curved section (24;240), with a corresponding first (22;220) and second (23;230) longitudinal section, said sections extending converging along the axis (X-X;Y-Y) of the device.

4. Device (1;100) according to claim 1, 2 or 3, wherein at least one of said first (20;201) and second (21;210) ends is generally S-shaped with said first curved section (24;240) for connection to said respective first (22;220) and second (23;230) longitudinal section, said S having a second curved section (25;250), said first curved sections (24;240) then being convergent.

5. Device (1;100) according to any one of claims 2 to 4, wherein at least said first end (20;201) extends substantially orthogonal to the respective first longitudinal section (22;220), each first (20;201) and second (22;220) end being faced towards one side of the axis (X-X;Y-Y) opposite to the side of the axis in which the second (3;300) and third (4;400) portions are positioned.

6. Device (1;100) according to any one of claims 2 to 5, wherein said first (22;220) and second (23;230) longitudinal section are connected with the second portion (3;300) through a third curved section (26,27;260,270) at their point of convergence.

7. Device (1;100) according to claim 6, wherein said first portion (3;300) is a fold with a pocket (30;301) facing towards said second end (20;210) of the first portion (2;200) and a narrowing (31;310) opposite to the pocket, the pocket having a bottom (32;320) which from one side connects to said third curved section (26,27;260,270) of said first portion and on the other side it is connected to said portion (4;400) through a section (33;330).

8. Device (1;100) according to claim 7, wherein said section (33;330) of said pocket (30;301) is inclined towards the first longitudinal section (22;220) of the first portion (2;200) so as to define therewith a narrowing (31;310).

9. Device (1;100) according to any one of claims 1 to 8, wherein said third portion (4;400) extends from the second portion (3;300) with a first section (40; 401) which is directed towards the first end (20;201) of the first portion (2;200) defining with said first end a narrowing (31;310), and a second section (41; 410) folds moving away from said first end so as to form a guide element for the wire (W) which should engage the second portion (3;300).

10. Device (1) according to any one of claims 4 to 9, wherein said first (20) and second (21) end (20) are both generally S-shaped with said first curved sections (24) converging and respective second curved sections (25) diverging.

11. Device (100) according to any one of claims 4 to 9, wherein said first end (201) is generally S-shaped and said second end (210) is generally U-shaped with a straight section (251) which extends from the curved section (240) towards the first end (201) and moving away from the longitudinal section (230).

12. Device (1) according to any one of claims 3 to 10, wherein said first (20) and second (21) end with the corresponding longitudinal section (22,23) lie on near parallel planes.

13. Device (100) according to any one of claims 4 to 9 and 11, wherein said second end (210) is inclined with respect to the longitudinal section (230) towards the longitudinal section (220) of the first end (201).

14. Device (100) according to any one of claims 7 to 9, 11 or 13 wherein said second portion (300) comprises a curved branch (331A) of a first part (101) of the device which connects a longitudinal section (330A) of the pocket (301) with a bottom (320) of the pocket and comprises a branch (320A) of said first part (101) of said bottom, said curved branch and branch of the bottom protruding with respect to the corresponding curved branch (331B) and branch of the bottom (320B) of a second part (110) of the device, when the device is seen laterally.

15. Agricultural pole (P) for supporting fixed or movable wires (W) for containing the vegetation, comprising at least one device (1;100) according to any one of claims 1 to 14.

16. Pole (P) according to claim 15, comprising two longitudinal opposite and recessed channels (G) whose bottom is provided with a plurality of holes (H1, H2) at least some of which being engaged by devices (1;100) according to any one of claims 1 to 14.

17. System (I) for supporting rows of plants, comprising two end poles (PE) fixed in the ground, fixed wires (FM) and wires (F) for containing the vegetation fixed to the two end poles (PE) at a pre-established height, a plurality of holes (P) according to claim 15 or 16 and arranged between said end poles.

18. Method for supporting plants along rows, comprising the steps of:
- fixing two braced end poles (PE) into the ground at a predetermined distance;
- arranging in a straight line between said two end poles (PE) a plurality of intermediate poles (PI) comprising devices (1;100) for supporting wires (F) to support the plants according to any one of claims 1 to 14;
- fixing to said two end poles at least one fixed wire (FM) to support a fruit cane of said plants and a plurality of movable wires (F1-F4) on two sides of said end poles so as to cover the entire length of the row in a parallel fashion and delimiting a space for containing the branches of the growing plants, wherein said movable and/or fixed wires can be reversibly hooked at different heights from the ground onto said intermediate poles by means of said devices (1,100).
